# DEMANDE DE BREVET EUROPEEN

(11) **EP 1 570 717 A1**
(43) Date de publication de la demande: **07.09.2005**
(21) Numéro de dépôt: 05290436.4
(22) Date de dépôt: 25.02.2005
(51) Int. Cl.: A01D 34/416

(54) **Filament de coupe reduisant le bruit pour appareil de coupe de végétaux**

(30) Priorité: 01.03.2004 FR 0402079
(71) Demandeur: SPEED FRANCE, 69400 Arnas (FR)
(72) Inventeur: Legrand, Emmanuel, 01240 St. Germain sur Renon (FR)
(74) Mandataire: Texier, Christian

(57) **Abrégé**

Un filament de coupe (10) pour débroussailleuses, coupe-bordures et analogues présente une section transversale généralement circulaire et possède à sa périphérie une pluralité d'encoches (11) espacées d'une distance comprise entre environ 12 et 19 mm et alignées selon au moins une direction parallèle à un axe du filament. La longueur desdites encoches, mesurée le long du filament, est sensiblement inférieure à ladite distance d'espacement.

Un tel filament permet de réduire le bruit en fonctionnement des appareils de coupe de végétaux tels que coupe-bordures, débrousailleuses, etc.

## Description

La présente invention concerne d'une façon générale les appareils de coupe de végétaux, notamment débrousailleuses ou coupe-bordures, et plus particulièrement les filaments de coupe en matière synthétique pour de tels appareils.

Depuis de nombreuses années, on a développé différentes formes de fils ou filaments de coupe destinés à être montés dans une tête de coupe, entraînée par un moteur électrique ou thermique, de manière à ce que la rotation rapide de la tête entraîne le ou les filaments, qui tendent à adopter une étendue rectiligne sous l'effet de la force centrifuge. Ces filaments sont en général réalisés par extrusion/étirage de polyamide.

Alors que les filaments les plus anciens présentaient une section circulaire et étaient lisses sur toute leur étendue, on a maintenant développé des filaments présentant des sections transversales variées et/ou évolutives, censées diminuer le bruit de l'appareil en fonctionnement en jouant sur les turbulences.

On trouve ainsi des filaments comportant des arêtes, des rainures, des gorges, ou encore des déformations locales du filament le long de son étendue.

Ces filaments connus, si certains permettent effectivement de réduire de façon sensible le bruit en fonctionnement, présentent toutefois un ou plusieurs des inconvénients suivants :
- la forme de la section transversale ou son évolution peut dans certains cas fragiliser le filament et le rendre propice à la rupture, notamment aux endroits où cette section transversale est diminuée ;
- la section transversale particulière du filament peut compromettre l'efficacité de sa retenue dans la tête de coupe, en particulier si cette section s'écarte significativement des sections standard telles qu'une section circulaire ou une section carrée ;
- la fabrication du filament est rendue plus compliquée et/ou plus onéreuse.

La présente invention vise à pallier ces limitations de l'état de la technique.

Elle propose à cet effet un1. Filament de coupe (10) pour débroussailleuses, coupe-bordures et analogues, caractérisé en ce qu'il présente une section transversale généralement circulaire et en ce qu'il possède à sa périphérie une pluralité d'encoches (11) espacées d'une distance comprise entre environ 12 et 19 mm et alignées selon au moins une direction parallèle à un axe du filament, la longueur desdites encoches, mesurée le long du filament étant sensiblement inférieure à ladite distance d'espacement.

Certains aspects préférés, mais non limitatifs, de ce filament de coupe sont les suivants :
* les encoches sont espacées d'une distance comprise entre 14 et 17 mm.
* le rapport entre la longueur des encoches et ladite distance d'espacement est comprise entre environ 1:4 et 1:7.
* la longueur des encoches est comprise entre environ 2 et 3 mm.
* les encoches présentent un fond généralement concave et lisse.
* la profondeur des encoches est comprise entre environ 0,4 et 0,8 mm.
* la longueur des encoches est supérieure à leur largeur, mesurée dans la direction circonférentielle du filament.
* le rapport entre la longueur des encoches et leur largeur est de l'ordre de 4:3.
* la largeur des encoches est comprise entre environ 1,5 et 2,2 mm.
* les encoches sont agencées en deux rangées essentiellement diamétralement opposées.
* les encoches d'une rangée sont décalées par rapport aux encoches de l'autre rangée.
* les encoches sont formées par enlèvement de la matière du filament.

La présente invention propose également un dispositif de coupe de végétaux tel qu'une débroussailleuse ou un coupe-bordures, comprenant une tête de coupe rotative apte à recevoir un ou plusieurs filaments de coupe, caractérisé en ce qu'il comporte au moins un brin d'un filament de coupe tel que défini ci-dessus et des moyens de retenue aptes à retenir le filament dans une position telle qu'une rangée d'encoches soit située, en utilisation, dans une région supérieure ou une région inférieure du filament.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
La figure 1 est une vue partiellement en élévation latérale et partiellement en coupe axiale d'un filament de coupe selon l'invention,
Les figures 2a et 2b sont des vues en section transversale du filament de la figure 1 au niveau des lignes a-a et b-b, respectivement,
La figure 3 est une vue de face d'une encoche formée dans le filament des figures 1, 2a et 2, et
La figure 4 est un graphique illustrant le progrès apporté par le filament de coupe selon l'invention en matière de réduction du bruit en fonctionnement.

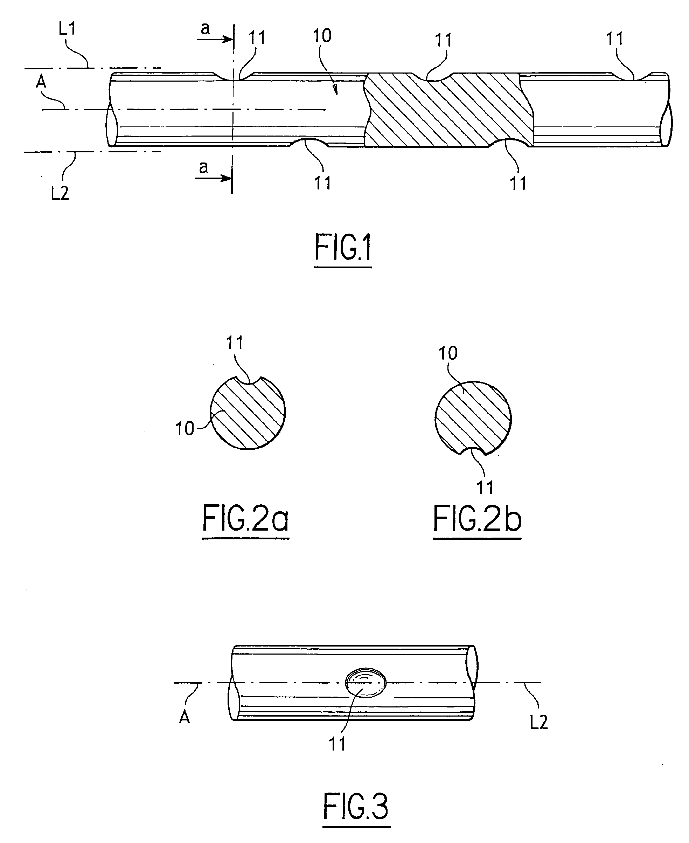

En référence tout d'abord aux figures 1, 2a, 2b et 3, on a représenté schématiquement un fil ou filament de coupe 10 pour appareil de coupe de végétaux (coupe-bordures, débroussailleuse, etc.).

Ce filament est réalisé à partir d'une base de section transversale circulaire, de préférence d'un diamètre standard par exemple de 1,5 mm, 2 mm, 2,5 mm, 3 mm, etc. Dans le présent exemple, le diamètre est de 3 mm.

Cette base de section circulaire est réalisée de préférence par une technique classique d'extrusion/étirage, en un matériau approprié tel qu'un polyamide ou un copolyamide. De nombreuses références de brevets antérieurs citent différents matériaux synthétiques utilisables pour la réalisation de tels filaments.

Dans le filament 10 sont formées une série d'encoches 11 comme on va le voir en détail ci-dessous.

Chaque encoche est formée de préférence par une opération d'enlèvement de matière à l'aide de lames commandées en déplacement en synchronisme avec le déplacement linéaire du filament en sortie du processus d'extrusion/étirage.

Dans le présent exemple, les encoches 11 sont réparties selon deux rangées ou lignes L1 et L2 s'étendant parallèlement à l'axe longitudinal A du filament et de façon diamétralement opposée. Dans chaque rangée, les encoches sont espacées les unes des autres d'un pas régulier et de préférence compris entre environ 12 et 19 mm, et plus particulièrement entre 14 et 17 mm. Dans le présent exemple, ce pas est de 14,5 mm.

On notera ici que ce pas peut varier dans une certaine mesure sur la longueur du fil, pour autant qu'il demeure essentiellement dans les limites précitées.

Chaque encoche présente de préférence une profondeur comprise entre environ 0,4 et 0,8 mm (ici 0,6 mm).

La longueur des encoches mesurée le long du filament, est sensiblement inférieure au pas entre encoches précité. Avantageusement, le rapport entre la longueur des encoches et ledit pas est comprise entre environ 1:4 et 1:7.

Pratiquement, on peut prévoir une longueur des encoches comprise entre environ 2 et 3 mm (ici 2,6 mm).

Selon un autre aspect du filament décrit ici, la longueur des encoches est supérieure à leur largeur, mesurée dans la direction circonférentielle du filament, avec un rapport entre longueur et largeur de l'ordre de 4:3.

Pratiquement, on prévoit une largeur des encoches comprise entre environ 1,5 et 2,2 mm (ici 1,8 mm).

Les lames ou autres moyens utilisés pour former les encoches sont conformés de telle sorte que le fond de chaque encoche soit une surface concave régulière, lisse. Ceci contribue en particulier, en combinaison avec le paramètre de profondeur, à ne pas fragiliser le filament au niveau des encoches.

Comme le montre la figure 1, les encoches 11 de la rangée L1 sont décalées par rapport à celles de la rangée opposée L2. La demanderesse a constaté que la valeur du décalage l'avait que très peu d'influence sur le niveau de réduction de bruit obtenu avec le filament de l'invention. Les encoches des deux rangées peuvent même se situer au même niveau les unes que les autres tout en gardant un niveau de réduction de bruit sensiblement identique.

Un décalage entre les encoches des deux rangées est toutefois préférable dans la mesure où la section transversale du filament au niveau d'une encoche isolée est moins réduite que s'il existait deux encoches opposées, et le filament est donc plus robuste.

La demanderesse a constaté qu'un filament tel que décrit ci-dessus assurait une réduction perceptible du niveau de bruit quelle que soit l'orientation du filament.

Elle a toutefois observé que les meilleurs résultats étaient obtenus si les deux rangées d'encoches étaient situées, en utilisation, respectivement dans la région supérieure et dans la région inférieure du filament.

Ainsi, dans une forme de réalisation avantageuse, le filament selon l'invention est utilisé avec un appareil de coupe dont la tête de coupe rotative est apte à retenir le filament dans une orientation maîtrisée.

A cet égard, on peut prévoir pour faciliter cette retenue orientée du filament que ce dernier présente une section transversale non circulaire, et par exemple polygonale.

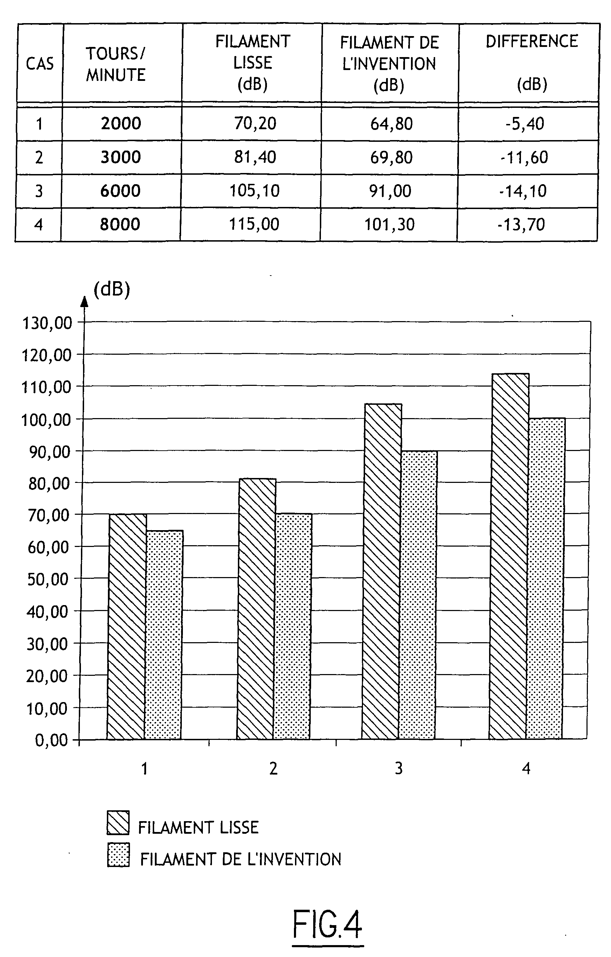

La figure 4 indique la réduction de bruit apportée par un filament selon l'invention ayant les paramètres dimensionnels indiqués dans ce qui précède.

A cet égard, on a effectué des essais comparatifs avec ce filament et un filament cylindrique lisse, ayant le même diamètre de 3 mm, pour quatre vitesses de rotation de tête de coupe de 2000, 3000, 6000 et 8000 tours/minute, respectivement. Le filament de l'invention était maintenu dans la tête de coupe de telle sorte que ses deux rangées d'encoches soient situées en haut et en bas du filament.

Le niveau de bruit était mesuré avec un décibelmètre dans la gamme audible, placé à chaque fois dans la même position.

On observe que pour les vitesses les plus élevées, une réduction de bruit sensiblement supérieure à 10 dB est obtenue.

Bien entendu, de nombreuses variantes peuvent être apportées à l'invention.

Tout d'abord, on peut en variante prévoir trois rangées d'encoches ou davantage.

Ensuite, un filament de coupe selon l'invention peut être réalisé en deux matériaux différents ou davantage, notamment par co-extrusion ou par application sur un fil monobloc d'un revêtement à fonction particulière, notamment anti-usure.

En outre, selon le diamètre du filament, celui-ci peut être utilisé soit en brins individuels de longueur donnée (fils de grand diamètre, pour gros travaux), soit en bobine dans le cas notamment d'un dévidoir automatique (fils de petit diamètre, pour gazon). Il peut être utilisé sur une tête de coupe apte à recevoir un seul brin de fil ou plusieurs brins de fil.

## Revendications

1. Filament de coupe (10) pour débroussailleuses, coupe-bordures et analogues, **caractérisé en ce qu'**il présente une section transversale généralement circulaire et **en ce qu'**il possède à sa périphérie une pluralité d'encoches (11) espacées d'une distance comprise entre environ 12 et 19 mm et alignées selon au moins une direction parallèle à un axe du filament, la longueur desdites encoches, mesurée le long du filament étant sensiblement inférieure à ladite distance d'espacement.

2. Filament selon la revendication 1, **caractérisé en ce que** les encoches (11) sont espacées d'une distance comprise entre 14 et 17 mm.

3. Filament selon l'une des revendications 1 et 2, **caractérisé en ce que** le rapport entre la longueur des encoches et ladite distance d'espacement est comprise entre environ 1:4 et 1:7.

4. Filament selon l'une des revendications 1 et 2, **caractérisé en ce que** la longueur des encoches (11) est comprise entre environ 2 et 3 mm.

5. Filament selon la revendication 1 à 4, **caractérisé en ce que** les encoches (11) présentent un fond généralement concave et lisse.

6. Filament selon l'une des revendications 1 à 5, **caractérisé en ce que** la profondeur des encoches (11) est comprise entre environ 0,4 et 0,8 mm.

7. Filament selon la revendication 6, **caractérisé en ce que** la longueur des encoches (11) est supérieure à leur largeur, mesurée dans la direction circonférentielle du filament.

8. Filament selon la revendication 7, **caractérisé en ce que** le rapport entre la longueur des encoches (11) et leur largeur est de l'ordre de 4:3.

9. Filament selon la revendication 7, **caractérisé en ce que** la largeur des encoches (11) est comprise entre environ 1,5 et 2,2 mm.

10. Filament selon l'une des revendications 1 à 9, **caractérisé en ce que** les encoches (11) sont agencées en deux rangées (L1, L2) essentiellement diamétralement opposées.

11. Filament selon la revendication 10, **caractérisé en ce que** les encoches (11) d'une rangée sont décalées par rapport aux encoches de l'autre rangée.

12. Filament selon l'une des revendications 1 à 11, **caractérisé en ce que** les encoches (11) sont formées par enlèvement de la matière du filament.

13. Dispositif de coupe de végétaux tel qu'une débroussailleuse ou un coupe-bordures, comprenant une tête de coupe rotative apte à recevoir un ou plusieurs filaments de coupe, **caractérisé en ce qu'**il comporte au moins un brin d'un filament de coupe selon l'une des revendications 1 à 12 et des moyens de retenue aptes à retenir le filament dans une position telle qu'une rangée d'encoches soit située, en utilisation, dans une région supérieure ou une région inférieure du filament.
